(19) **Europäisches Patentamt**
**European Patent Office**
**Office européen des brevets**

(11) Veröffentlichungsnummer: **0 235 747 B1**

(12) **EUROPÄISCHE PATENTSCHRIFT**

(45) Veröffentlichungstag der Patentschrift: **13.11.91**

(51) Int. Cl.⁵: **B23K 9/20**

(21) Anmeldenummer: 87102729.8

(22) Anmeldetag: 26.02.87

(54) **Bolzenschweissgerät.**

(30) Priorität: 28.02.86 DE 3606613

(43) Veröffentlichungstag der Anmeldung:
09.09.87 Patentblatt 87/37

(45) Bekanntmachung des Hinweises auf die
Patenterteilung:
13.11.91 Patentblatt 91/46

(84) Benannte Vertragsstaaten:
**AT BE CH FR GB IT LI**

(56) Entgegenhaltungen:
**DE-A- 2 818 969**
**US-A- 3 456 090**

(73) Patentinhaber: **HBS Heberle Bolzenschweiss-**
**Systeme GmbH & Co KG**
**Friesenheimer Strasse 23-25**
**W-6800 Mannheim(DE)**

(72) Erfinder: **Heberle, Manfred**
**Ohmstrasse 3**
**W-8060 Dachau(DE)**

(74) Vertreter: **Weber, Otto Ernst, Dipl.-Phys. et al**
**Hofbrunnstrasse 36**
**W-8000 München 71(DE)**

## Beschreibung

Die Erfindung betrifft ein Bolzenschweißgerät mit einer Vorrichtung zum Abheben eines Schweißbolzens von einem Werkstück um einen vorgegebenen Hub, bestehend aus einer Magnetspule, einem Tauchanker, einem damit verbundenen koaxial dazu verlaufenden und zu einer Schweißbolzenhalterung führenden Kolben sowie aus einem axial verstellbaren Ankeranschlag.

Bekanntlich werden derartige Bolzenschweißgeräte eingesetzt, um einen Schweißbolzen unter Zünden eines Lichtbogens auf einem Werkstück zu verschweißen. Um den Schweißpunkt zu fixieren, wird das Schweißgerät zuerst in der Weise auf das Werkstück aufgesetzt, daß die Spitze des Schweißbolzens das Werkstück berührt. Anschließend wird der Schweißbolzen mit Hilfe einer elektromagnetischen Vorrichtung um einen vorgegebenen Hub zurückgezogen, um dann in Richtung auf das Werkstück beschleunigt zu werden. Durch den Stauchdruck wird eine innige Verbindung der Schmelze des Werkstücks und des Schweißbolzens hergestellt.

Abhängig von den Materialeigenschaften des Werkstücks und des Bolzens ist es erwünscht, den Hub unterschiedlich groß auszuführen, um dadurch die Auftreffgeschwindigkeit des Bolzens zu steuern. Bei einem Bolzenschweißgerät der eingangs genannten Art, das aus der DE-A1-28 18 969 bekannt ist, wird dies durch einen axial verstellbaren Ankeranschlag erreicht. Der Ankeranschlag ist etwa kolbenförmig zum Einführen in die elektrische Magnetspule ausgebildet und mit einem Außengewinde versehen, mit welchem er in einem hinter der Magnetspule angeordneten Gewindeblock eingeschraubt ist. Er weist an seinem hinteren Ende eine Anzahl von auf dem Umfang verteilten radialen Kerben auf, in welche in radialer Richtung ein Schraubenzieher oder ein anderes Werkzeug zum Verdrehen des Anschlags angesetzt werden kann. Da der Zugang zu den Kerben nur über eine relativ kleine Gehäuseöffnung möglich ist, kann mit dem Werkzeug nur ein kurzer Stellweg ausgeführt werden, so daß das Werkzeug bei einer größeren Hubänderung mehrmals angesetzt werden muß. Um den Hub zu verkleinern, muß der Ankeranschlag in die Magnetspule hineingedreht werden. Das hat zwangsläufig zur Folge, daß auch das Magnetfeld der Magnetspule geändert wird. Ist der Anschlag zur Einstellung eines kleinen Hubs tief in die Magnetspulen eingebracht, so liegt eine starke Magnetfeldschwächung vor. Um diese auszugleichen muß die Magnetspule eine entsprechend große Zahl von Windungen aufweisen, was zur Folge hat, daß sie ein großes Gewicht und ein großes Volumen aufweisen muß. Dadurch wird die Schweißpistole insgesamt relativ unhandlich und schwer. Die Handhabung führt daher schnell zu Ermüdungserscheinungen bei der Bedienungsperson.

Bei dem in der US-A-3 456 090 beschriebenen Bolzenschweißgerät ist der Ankeranschlag durch ein Auflager des Schraubgewindes an der Außenseite des Kolbengestänges gebildet. Die Verstellung des Ankeranschlags und damit des Bolzenhubes ist mit Hilfe eines schraubenzieherähnlichen Elementes und eines Einstellschlitzes von außen her möglich. Nachteilig ist bei dieser Einrichtung, daß die Hubverstellung relativ unpräzise ist und zudem unhandlich. Außerdem ist für das Bolenschweißgerät eine relativ große Magnetspule erforderlich, die das Gewicht und das Volumen des Gerätes erhöht.

Der Erfindung liegt die **Aufgabe** zugrunde, ein Schweißgerät der obengenannten Art anzugeben, dessen Gewicht und Volumen vermindert sind.

Diese Aufgabe wird dadurch gelöst, daß der Ankeranschlag zusammen mit der Magnetspule in Achsrichtung des Tauchankers verstellbar angeordnet ist.

Das Prinzip der Erfindung liegt also darin, den Ankeranschlag und die Magnetspule zu verschieben, so daß ein konstantes Magnetfeld aufrechterhalten wird. Bei der Auslegung der Wicklung des Magnetfeldes muß also keine Magnetfeldänderung berücksichtigt werden. Die Magnetkraft kann also ohne Einschränkungen voll ausgenützt werden. Das hat den Vorteil, daß ein räumlich kleiner Magnet eingesetzt werden kann, der eine beträchtliche Verkleinerung des Bolzenschweißgerätes ermöglicht.

Eine bevorzugte Ausgestaltung der Erfindung besteht darin, daß der Ankeranschlag und die Magnetspule auf einem gemeinsamen Träger angeordnet sind, daß der Träger ein koaxial zum Tauchanker verlaufendes Gewinde zur Aufnahme einer in einem Gehäuse drehbar gelagerten Stellschraube aufweist, und daß die Stellschraube bis an die Gehäuseaußenseite geführt ist. Da die Stellschraube von außen bedient werden kann, ist die Verstellung des Ankeranschlages möglich, ohne daß das Gehäuse geöffnet werden muß. Das Einstellen kann daher in kurzer Zeit erfolgen, so daß die Verfügbarkeit des Bolzenschweißgerätes sehr hoch ist.

Unter ergonomischen Gesichtspunkten erweist es sich als sehr vorteilhaft, daß das Gewinde zwischen dem Träger und der Stellschraube als Linksgewinde ausgebildet ist. Auf diese Weise wird bei einer Drehung im Uhrzeigersinn eine Verkürzung des Hubs erreicht, was von einer Bedienperson tatsächlich auch gewohnheitsmäßig erwartet wird. Würde man ein Rechtsgewinde verwenden, was grundsätzlich natürlich möglich ist, so würde bei einer Drehung im Uhrzeigersinn eine Vergrößerung des Hubs erfolgen.

Ferner ist es vorteilhaft, daß das freie Ende der Stellschraube mit einem Bedienelement versehen ist, so daß sie unmittelbar mit den bloßen Händen verdreht werden kann. Durch diese Maßnahme wird der Bedienungskomfort weiter erhöht. Eine bevorzugte Ausgestaltung des Bedienelementes besteht darin, daß es als Kappe ausgebildet ist, die den hinteren Teil des Gehäuses abschließt. Diese Maßnahme stellt nicht nur eine formschöne Ausgestaltung des Bolzenschweißgerätes dar, sondern sie hat auch den Vorteil, daß sie leicht gedreht werden kann, auch wenn die Bedienperson beispielsweise Schutzhandschuhe trägt.

Es erweist sich als besonders vorteilhaft, daß die Kappe aus Aluminium hergestellt ist. Sie schützt auf diese Weise das ansonsten in der Regel aus Kunststoff ausgebildete Gehäuse an seinem rückwärtigen Teil vor Schlägen und Stößen. Weiterhin ist es vorteilhaft, daß die Stellschraube eine Scheibe aus isolierendem Material zur Trennung des dem Elektromagneten zugewandten Teils von dem dem Bedienelement zugewandten Teil aufweist, und daß der Rand der Scheibe mit einer im Gehäuse umlaufenden Nut zur ortsfesten Lagerung der Stellschraube in axialer Richtung in Eingriff steht.

Eine andere Weiterbildung der Stellschraube besteht darin, daß sie mit einer mittigen Ausnehmung zur Aufnahme einer mit dem Magnetanker verbundenen Kolbenstange versehen ist.

Die Einstellung des Hubs wird dadurch erleichtert, daß das Gehäuse ein Sichtfenster im Verschiebebereich des Trägers und/oder des Elektromagneten aufweist. Wenn an diesem Sichtfenster zusätzlich auch eine Skala angebracht ist, so kann der Hub sehr genau und reproduzierbar eingestellt werden. Eine bevorzugte Weiterbildung des Trägers besteht darin, daß er als Hohlzylinder mit einem Innengewinde ausgebildet ist, und daß der Ankeranschlag auf einem Zylinderboden ausgebildet ist.

Im folgenden wird die Erfindung anhand eines in einer Figur dargestellten Ausführungsbeispieles weiter beschrieben.

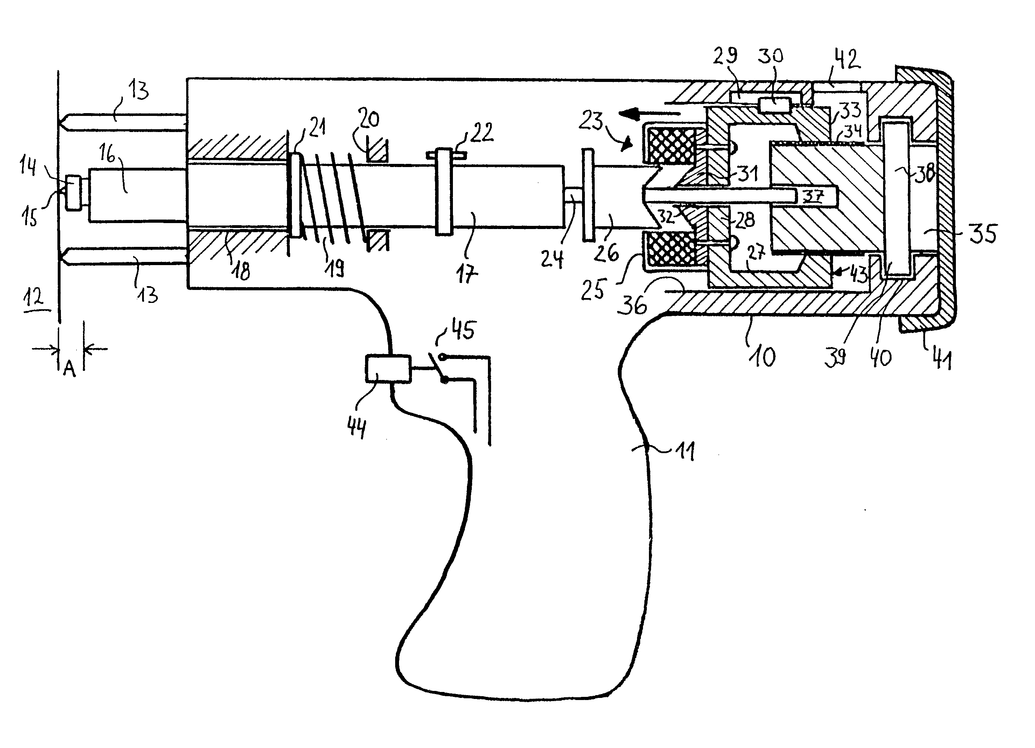

Die Figur zeigt schematisch einen Längsschnitt durch eine Schweißpistole.

Das Bolzenschweißgerät gemäß der Figur ist als Bolzenschweißpistole ausgebildet. Es besteht aus einem Gehäuse 10 aus einem isolierenden Kunststoffmaterial sowie einem Pistolengriff 11. Die Figur veranschaulicht einen Zustand, in welchem das Bolzenschweißgerät auf die Oberfläche eines Werkstückes 12 mit Hilfe von zwei zugespitzten Abstandshaltern 13 aufgesetzt ist.

Ein Schweißbolzen 14 mit einer Zündspitze 15 ist in eine als Spannfutter ausgebildete Schweißbolzenhalterung 16 eingesteckt. Der Schweißbolzen 14 kann zwei Positionen einnehmen. In der hier dargestellten Position sitzt die Zündspitze 15 auf dem Werkstück 12 auf, so daß der Schweißpunkt genau fixiert ist. In der zweiten Position ist der Schweißbolzen mit Hilfe einer noch zu beschreibenden Vorrichtung um einen vorgegebenen Hub A von der Werkstückoberfläche 12 zurückgezogen. Dieser Hub A ist zur Durchführung des Schweißvorganges erforderlich. Beim Abheben des Schweißbolzens 14 wird ein Zündlichtbogen gezogen, der dann in einen Schweißlichtbogen umgewandelt wird, bis der Bolzen 14 von einer Rückstellvorrichtung auf das Werkstück 12 zurückbewegt wird. Durch dem Lichtbogen wird ein Schmelzbad erzeugt, das im wesentlichen so lange flüssig bleibt, bis der Schweißbolzen 14 auf das Werkstück 12 auftrifft und das Schweißbolzenmaterial mit dem Werkstückmaterial verbunden wird.

Die Schweißbolzenhalterung 16 sitzt auf dem vorderen Ende eines Kolbens 17, der in einer Führung 18 im Gehäuse 10 axial beweglich gelagert ist. Er wird von einer Rückstellfeder 19 in Richtung auf das Werkstück 12 vorgespannt, die einerseits an einer Gehäuseschulter 20 und andererseits an einem Kolbenring 21 auf dem Kolben 17 abgestützt ist. Ein Drehen des Kolbens 17 wird durch eine Sicherung 22 verhindert. An seinem hinteren Ende ist der Kolben 17 über eine koaxiale Kolbenstange 24 mit einer Vorrichtung 23 zum Abheben des Schweißbolzens 16 vom Werkstück 12 verbunden.

Die Vorrichtung 23 weist einen Elektromagneten mit einer Magnetspule 25 und einem Tauchanker 26 auf, der über eine mittige Ausnehmung fest auf der Kolbenstange 24 sitzt. Die Magnetspule 25 ist auf einem Träger 43 angeordnet, welcher koaxial zum Kolben 17, zur Kolbenstange 24 und zum Tauchanker 26 im Gehäuse 10 verstellbar ist.

Der Träger 43 ist in dem hier gezeigten Beispiel topfförmig mit einem Zylindermantel 27 und einem Boden 28 ausgebildet, der durch eine mittige Öffnung von der Kolbenstange 24 durchsetzt wird. Ein in einer gehäuseseitigen Längsnut 29 geführter Keil 30 auf der Außenseite des Zylindermantels 27 dient als Verdrehsicherung. Auf der Außenseite des Bodens 28 ist das Joch 31 der Magnetspule 25 verschraubt. Es ist jedoch ohne weiteres ersichtlich, daß das Joch 31 und der Träger 43 auch einstückig ausgebildet sein können, so daß die Magnetspule 25 unmittelbar auf dem Träger 43 angeordnet ist.

Das Joch 31 schließt die Spulenöffnung nach hinten ab und dient dabei gleichzeitig als Ankeranschlag. Das Joch 31 weist ferner einen Kegel 32 auf, der mittig von der Kolbenstange 24 längsbeweglich durchsetzt wird. Der Tauchanker 26 ist an seiner Stirnseite mit einer entsprechenden Ausnehmung versehen, in welche der Kegel 32 aufgenommen wird, sobald der Tauchanker 26 vollständig in die Magnetspule 25 eingeführt ist.

Der Träger 43 ist über eine Stellschraube 35 koaxial in einer gehäusefesten zylindrischen Führung 36 verstellbar. Die Stellschraube 35, deren Außendurchmesser in dem hier gezeigten Beispiel etwa dem Innendurchmesser des Zylindermantels 27 entspricht, ist mit einem linksgängigen Bewegungsgewinde 34 versehen. Diesem Bolzengewinde entsprechend befindet sich ein Muttergewinde auf einem kreisringförmigen Endstück 33 des Zylindermantels 27.

Entlang der Mittenachse der Stellschraube 35 ist eine Ausnehmung 37 vorhanden, in welcher die Kolbenstange 24 geführt ist. Die Stellschraube 35 ist durch eine elektrisch isolierende Scheibe 38 in einem vorderen und hinteren Abschnitt geteilt. Die Scheibe 38 weist einen größeren Durchmesser auf als die Stellschraube 35, so daß ein über dem Umfang der Stellschraube 35 herausstehender Ring 39 gebildet wird. Dieser wird in einer gehäusefesten umlaufenden Nut 40 geführt. Dank dieser Ausbildung ist die Stellschraube in axialer Richtung gehalten. Auf der nach außen weisenden Stirnseite der Stellschraube 35 befindet sich drehfest eine Kappe 41 aus Leichtmetall. Sie nimmt im wesentlichen die gesamte rückwärtige Stirnseite des Gehäuses 10 ein. Die Kappe 41 hat die Funktion eines Bedienelementes für die Stellschraube 35. Sie ist vorzugsweise mit einer Rändelung versehen, so daß sie griffig ist, wenn sie gedreht wird.

Zum weiteren Verständnis der Erfindung wird im folgenden die Funktion des Schweißgerätes beschrieben. Unter der Annahme, daß in der in der Figur gezeigten Stellung der Schweißpunkt genau fixiert ist, wird über einen Auslöser 44 im Pistolengriff 11 ein Schalter 45 betätigt, welcher Bestandteil eines elektronischen Steuerschaltkreises ist. Ein derartiger Steuerschaltkreis ist ebenso wie ein Schweißstromkreis an sich bekannt, so daß sie hier nicht im einzelnen beschrieben werden. Über den Steuerschaltkreis wird daraufhin die Magnetspule 25 erregt, so daß der Tauchanker 26 nach hinten gezogen wird und der Schweißbolzen 14 vom Werkstück 12 abgehoben wird. Der Hub A entspricht dabei genau dem Weg des Tauchankers 26, bis dieser auf den Ankeranschlag auf dem Joch 31 bzw. dem Träger 43 auftrifft. Diese Bewegung erfolgt gegen die Kraft der Rückstellfeder 19. Sobald der die Wicklung der Magnetspule erregende Strom abgeschaltet wird, wird die Rückstellfeder 19 sofort wirksam und drückt den Kolben 17 mit dem Schweißbolzen 14 unter Bildung eines Lichtbogens auf das Werkstück 12.

Die Figur veranschaulicht schematisch denjenigen Zustand der Vorrichtung 23, in welcher der Kolben 17 seinen maximalen Hub ausführen kann. Der Träger 43 befindet sich daher zusammen mit der Magnetspule 25 und dem Ankeranschlag in seiner hinteren Endstellung. Um den Hub A zu verkleinern, wird die Kappe 41 im Uhrzeigersinn gedreht. Dabei wird der Träger 43 mit dem Anschlag und der Magnetspule 25 in Pfeilrichtung verschoben. Die Magnetspule 25 wird dabei entsprechend weiter über den Tauchanker 26 geschoben.

Die genaue Position des Trägers 43 kann über ein Sichtfenster 42 im Gehäuse 10 von außen überwacht und mit einer Skalierung (nicht dargestellt) verglichen werden.

## Patentansprüche

1. Bolzenschweißgerät mit einer Vorrichtung (23) zum Abheben eines Schweißbolzens (14) von einem Werkstück (12) um einen vorgegebenen Hub, bestehend aus einer Magnetspule (25), einem Tauchanker (26), einem damit verbundenen, koaxial dazu verlaufenden und zu einer Schweißbolzenhalterung (16) führenden Kolben (17) sowie aus einem axial verstellbaren Ankeranschlag (31)
dadurch **gekennzeichnet,**
daß der Ankeranschlag (31) zusammen mit der Magnetspule (25) in Achsrichtung des Tauchankers (26) verstellbar angeordnet ist.

2. Bolzenschweißgerät nach Anspruch 1,
dadurch **gekennzeichnet,**
daß der Ankeranschlag und die Magnetspule (25) auf einem gemeinsamen Träger (43) angeordnet sind, daß der Träger (43) ein koaxial zum Tauchanker (26) verlaufendes Gewinde (34) zur Aufnahme einer in einem Gehäuse (10) drehbar gelagerten Stellschraube (35) aufweist, und daß die Stellschraube (35) bis an die Gehäuseaußenseite geführt ist.

3. Bolzenschweißgerät nach Anspruch 2,
dadurch **gekennzeichnet,**
daß das Gewinde (34) zwischen dem Träger (43) und der Stellschraube (35) als Linksgewinde ausgebildet ist.

4. Bolzenschweißgerät nach Anspruch 2 oder 3,
dadurch **gekennzeichnet,**
daß der Träger (43) als Hohlzylinder mit einem Innengewinde ausgebildet ist, und daß der Ankeranschlag auf dem Zylinderboden (28) ausgebildet ist.

5. Bolzenschweißgerät nach einem der Ansprüche 2 bis 4,
dadurch **gekennzeichnet,**
daß das freie Ende der Stellschraube (35) mit einem Bedienelement versehen ist, so daß sie unmittelbar mit den bloßen Händen verdreht werden kann.

6. Bolzenschweißgerät nach Anspruch 5, dadurch **gekennzeichnet,** daß das Bedienelement als Kappe (41) ausgebildet ist, welche das Gehäuse (10) rückseitig im wesentlichen abschließt.

7. Bolzenschweißgerät nach Anspruch 6, dadurch **gekennzeichnet,** daß die Kappe (41) aus Aluminium hergestellt ist.

8. Bolzenschweißgerät nach einem der Ansprüche 2 bis 7, dadurch **gekennzeichnet,** daß die Stellschraube (35) eine Scheibe (38) aus isolierendem Material zur Trennung des dem Elektromagneten zugewandten Teils von dem dem Bedienelement zugewandten Teil aufweist, und daß der Rand der Scheibe (38) mit einer am Gehäuse (10) umlaufenden Nut (40) zur ortsfesten Lagerung der Stellschraube (35) in axialer Richtung in Eingriff steht.

9. Bolzenschweißgerät nach einem der Ansprüche 2 bis 8, dadurch **gekennzeichnet,** daß die Stellschraube (35) mit einer mittigen Ausnehmung zur Aufnahme einer mit dem Magnetanker verbundenen Kolbenstange (24) versehen ist.

10. Bolzenschweißgerät nach einem der vorhergehenden Ansprüche, dadurch **gekennzeichnet,** daß das Gehäuse (10) ein Sichtfenster (42) im Verschiebebereich des Trägers (43) und/oder des Elektromagneten Aufweist.

**Claims**

1. Stud welding fixture with a device (23) for raising a welding stud (14) from a workpiece (12) by a predetermined travel, comprising a field coil (25), a plunger-type armature (26), a piston (17) connected and coaxial thereto and leading to a welding stud holder (16), as well as an axially adjustable armature stop (31), characterized in that the armature stop (31) together with the field coil (25) is adjustably arranged in the axial direction of the plunger-type armature (26).

2. Stud welding fixture according to claim 1, characterized in that the armature stop and the field coil (25) are located on a common support (43), that the support (43) has a thread (34) running coaxially to the plunger-type armature (26) for receiving a setscrew (35) rotatably mounted in a casing (10) and that the setscrew (35) extends up to the outside of the casing.

3. Stud welding fixture according to claim 2, characterized in that the thread (34) between the support (43) and the setscrew (35) is constructed as a left-handed thread.

4. Stud welding fixture according to claims 2 or 3, characterized in that the support (43) is constructed as a hollow cylinder with an internal thread and that the armature stop is constructed on the cylinder bottom (28).

5. Stud welding fixture according to one of the claims 2 to 4, characterized in that the free end of the setscrew (35) is provided with an operating element, so that it can be manually turned.

6. Stud welding fixture according to claim 5, characterized in that the operating element is constructed as a cap (41), which substantially terminates the back of the casing (10).

7. Stud welding fixture according to claim 6, characterized in that the cap (41) is made from aluminium.

8. Stud welding fixture according to one of the claims 2 to 7, characterized in that the setscrew (35) has a disk (38) made from insulating material for separating the part facing the electromagnet from the part facing the operating element and that the edge of the disk (38) is in engagement with a groove (40) running round the casing (10) for the fixed mounting of the setscrew (35) in the axial direction.

9. Stud welding fixture according to one of the claims 2 to 8, characterized in that the setscrew (35) is provided with a central recess for receiving a piston rod (24) connected to the armature.

10. Stud welding fixture according to one of the preceding claims, characterized in that the casing (10) has an inspection window (42) in the displacement area of the support (43) and/or the electromagnet.

**Revendications**

1. Appareil de soudage à l'arc avec percussion comportant un dispositif (23) pour soulever un goujon de soudage (14) d'une pièce (12) d'une course prédéterminée, ce dispositif comprenant une bobine électromagnétique (25), un induit plongeur (26) auquel est relié un goujon (17), coaxial et allant au support (16) du goujon de soudage, et une butée d'induit (31) réglable axialement, appareil caractérisé en ce que la butée d'induit (31) et la bobine électromagnétique (25) sont montées réglables dans la direction axiale de l'induit plongeur (26).

2. Appareil de soudage à l'arc avec percussion selon la revendication 1, caractérisé en ce que la butée d'induit et la bobine électromagnétique (25) sont montées sur un support (43) commun, ce support (43) ayant un filetage (34) coaxialement à l'induit plongeur (26) pour recevoir une vis de réglage (35) montée à rotation dans un boîtier (10) et cette vis de réglage (35) est guidée jusqu'au niveau de la face extérieure du boîtier.

3. Appareil de soudage à l'arc avec percussion selon la revendication 2, caractérisé en ce que le filetage (34) est un filetage à pas à gauche entre le support (43) et la vis de réglage (35).

4. Appareil de soudage à l'arc avec percussion selon la revendication 2 ou 3, caractérisé en ce que le support (43) est un cylindre creux avec un filetage intérieur et la butée d'induit est réalisée sur le fond (28) du cylindre.

5. Appareil de soudage à l'arc avec percussion selon l'une des revendications 2 à 4, caractérisé en ce que l'extrémité libre de la vis de réglage (35) est munie d'un élément de manoeuvre pour pouvoir être tournée directement avec la main.

6. Appareil de soudage à l'arc avec percussion selon la revendication 5, caractérisé en ce que l'élément de manoeuvre est un capuchon (41) qui ferme pratiquement le boîtier (10) par sa face arrière.

7. Appareil de soudage à l'arc avec percussion selon la revendication 6, caractérisé en ce que le capuchon (41) est en aluminium.

8. Appareil de soudage à l'arc avec percussion selon l'une des revendications 2 à 7, caractérisé en ce que la vis de réglage (35) comporte une rondelle (38) en un matériau isolant pour séparer la partie tournée vers l'électro-aimant de la partie de manoeuvre et en ce que le bord de la rondelle (38) est en prise dans une rainure périphérique (40) pour fixer la position de la vis de réglage (35) dans la direction axiale.

9. Appareil de soudage à l'arc avec percussion selon l'une des revendications 2 à 8, caractérisé en ce que la vis de réglage (35) est munie d'une cavité centrale pour recevoir une tige de piston (24) reliée à l'induit.

10. Appareil de soudage à l'arc avec percussion selon l'une des revendications précédentes, caractérisé en ce que le boîtier (10) comporte une fenêtre de visualisation (42) dans la zone de translation du support (43) et/ou de l'électro-aimant.